(19) Europäisches Patentamt

European Patent Office

Office européen des brevets

(11) **EP 1 430 101 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(21) Anmeldenummer: **02791591.7**

(22) Anmeldetag: **31.10.2002**

(51) Int Cl.⁷: **C08L 97/02**, C08L 61/00, C09J 161/00

(86) Internationale Anmeldenummer:
**PCT/DE2002/004057**

(87) Internationale Veröffentlichungsnummer:
**WO 2003/040236 (15.05.2003 Gazette 2003/20)**

(54) **VERFAHREN ZUR HERSTELLUNG LIGNOCELLULOSEHALTIGER FORMKÖRPER**

METHOD FOR THE PRODUCTION OF MOULDED BODIES COMPRISING LIGNOCELLULOSE

PROCEDE DE PRODUCTION DE CORPS FACONNES CONTENANT DE LA LIGNOCELLULOSE

(84) Benannte Vertragsstaaten:
**AT BE BG CH CY CZ DE DK EE ES FI FR GB GR IE IT LI LU MC NL PT SE SK TR**

(30) Priorität: **03.11.2001 DE 10154141**

(43) Veröffentlichungstag der Anmeldung:
**23.06.2004 Patentblatt 2004/26**

(73) Patentinhaber: **Fraunhofer-Gesellschaft zur Förderung der angewandten Forschung e.V. 80686 München (DE)**

(72) Erfinder:
• **FRIEBEL, Stefan 38173 Evessen (DE)**
• **THOLE, Volker 38102 Braunschweig (DE)**
• **EBELING, Volker 38100 Braunschweig (DE)**
• **HAFFELDER, Friederike 74906 Bad Rappenau (DE)**

(74) Vertreter: **Stornebel, Kai (DE) et al Gramm, Lins & Partner GbR, Theodor-Heuss-Strasse 1 38122 Braunschweig (DE)**

(56) Entgegenhaltungen:
EP-A- 0 403 827          WO-A-01/14631
WO-A-96/41915          US-A- 4 517 240

• PATENT ABSTRACTS OF JAPAN vol. 1999, no. 05, 31. Mai 1999 (1999-05-31) & JP 11 049929 A (SUMITOMO BAKELITE CO LTD), 23. Februar 1999 (1999-02-23)
• DATABASE CHEMABS [Online] CHEMICAL ABSTRACTS SERVICE, COLUMBUS, OHIO, US; "Particle boards" retrieved from STN Database accession no. 95:45039 XP002232099 & JP 56 011239 A (EIDAI CO. LTD.) 4. Februar 1981 (1981-02-04)
• DATABASE CHEMABS [Online] CHEMICAL ABSTRACTS SERVICE, COLUMBUS, OHIO, US; "Effect of surfactants on the wetting ability of impregnating amino resins" retrieved from STN Database accession no. 99:196834 XP002232100 & MAKARENKO V K ET AL.: IZVESTIYA VYSSHIKH UCHEBNYKH ZAVEDENII, LESNOI ZHURNAL, Nr. 4, 1983, Seiten 85-88,
• DATABASE CHEMABS [Online] CHEMICAL ABSTRACTS SERVICE , COLUMBUS, OHIO, US; "Manufacture of light-weight ligneous fiberboards with high strenghts and insulative properties" retrieved from STN Database accession no. 127:150348 XP002232101 & JP 09 176991 A (DAINIPPON INK AND CHEMICALS INC.) 8. Juli 1997 (1997-07-08)

EP 1 430 101 B1

**Beschreibung**

Die Erfindung betrifft ein Verfahren zur Herstellung lignocellulosehaltiger Formkörper aus Partikeln, wie z.B. Fasern oder Spänen, und organischen Bindemitteln. Bei den herzustellenden Formkörpern kann es sich um leichte, mitteldichte oder hochdichte Formkörper, insbesondere Platten handeln.

Die Partikel können in bekannter Weise durch spanende oder mahlende Prozesse bei Raumtemperatur oder bei erhöhter Temperatur unter Einwirkung von Dampf hergestellt werden. So werden z.B. Hackschnitzel in einem Refiner zu Fasern aufgemahlen, die nach ihrer Beleimung zu einer Fasermatte gestreut werden, die dann in einer Heißpresse zu einer Faserplatte verpresst wird.

Da das Bindemittel bei der Herstellung derartiger Formkörper einen hohen Kostenanteil darstellt, ist die Fachwelt seit vielen Jahren intensiv um eine Verringerung des Bindemittelverbrauchs bemüht. So wurde für die Beleimung von Fasern die Blow-line-Beleimung eingeführt; für die Leimeindüsung wurden verschiedene Düsen-Anstellwinker realisiert; ausprobiert wurden Gegenstrom-Leimeindüsungen, Veränderungen des Leimpunktes, der Strömungsgeschwindigkeit, der Strömungsgeometrie und dergleichen. Auch bei der Herstellung von Spanplatten wurden zahlreiche Vorschläge zur Reduzierung des Leimverbrauchs untersucht. So wurde z.B. bei einem Doppelwellenmischer die Mischintensität erhöht, ohne jedoch den Leimverbrauch für eine ausreichende Beleimung der Späne nennenswert absenken zu können. Dabei handelt es sich sowohl bei der Blowline-Beleimung wie bei der Mischerbeleimung jeweils um eine Tropfenbeleimung, d.h. das Bindemittel lagert sich tropfenförmig auf der Oberfläche der Fasern oder Späne ab.

Zur Verbesserung der Leimverteilung auf der Oberfläche der Fasern oder Späne wurde auch eine Verdünnung des Bindemittels auf einen Feststoffgehalt von 35 - 45 % empfohlen. Jedoch führte auch dieser Vorschlag in der Praxis nicht zu positiven Ergebnissen.

Aus der US-5,164,432 ist eine Formenmasse aus Polyolefinen, Zellulosefasern und ungesätigten Organosilanen bekannt, mit einem Elastizitätsmodul bei 100°C höher als 1250 MPa. Die Zellulosefasern werden in das vorgeschmolzene Polyolefin, das die ungesätigten Organosilane enthält, eingeknetet und unmittelbar in die herzustellenden Objekte umgewandelt.

Der Erfindung liegt die Aufgabe zugrunde, bei der Herstellung lignocellulosehaltiger Wirkstoffe oder Formkörper deren mechanischen Eigenschaften bei gleichbleibendem Bindemittelverbrauch zu verbessern bzw. ohne Nachteil für deren mechanischen Eigenschaften den Bindemittelverbrauch zu reduzieren.

Ausgehend von dem eingangs definierten Verfahren wird diese Aufgabe erfindungsgemäß dadurch gelöst, dass dem Bindemittel vor seiner Vermischung mit den Partikeln ein oberflächenaktives Additiv auf Basis eines modifizierten Polydialkylsiloxans, eines Polyacrylats oder Polyacrylat-Copolymers zugegeben wird.

Als Bindemittel werden Harnstoff-Formaldehyd-, Melamin-, Phenolharze oder eine Kombination aus diesen verwendet.

Mit Hilfe eines erfindungsgemäßen oberflächenaktiven Additivs erreicht man eine gleichmäßige flächige Leimverteilung auf den Partikeln und somit eine Vergrößerung der klebaktiven Kontaktflächen zwischen den Partikeln und hierdurch einen besseren Verbund zwischen den Partikeln. Erreicht wird also eine dreidimensional wirkende Haftverbesserung zwischen den lignocellulosehaltigen Partikeln und somit eine Verbesserung der mechanischen Eigenschaften, insbesondere der Querzugfestigkeit der erfindungsgemäß hergestellten Formkörper.

Handelsübliche Bindemittel auf Basis Harnstoff-Formaldehyd haben einen Festkörpergehalt von 60 - 70 %. Neben den üblichen Zuschlagstoffen ist Wasser der weitere Hauptanteil im Bindemittel. Durch das eine hohe Oberflächenspannung aufweisende Wasser können derartige Bindemittel die ligno-cellulosehaltigen Partikel nur unzureichend benetzen, was in der Praxis zu der vorstehend bereits erwähnten punktförmigen Leimverteilung führt. Durch Zugabe eines erfindungsgemäßen oberflächenaktiven Additivs wird die Untergrund-benetzung des Leims auf das Holz verbessert; dies führt zu einer verbesserten Haftung. Gleichzeitig muss jedoch darauf geachtet werden, dass die Oberflächenenthalpie der Leimoberfläche nicht zu niedrig wird, da. andernfalls entsprechend der Gleichung

$$W^a = \sigma_{sv} + \sigma_{lv} - \sigma_{sl} \text{ mit}$$

$\sigma_{sv}$ = Freie Oberflächenenthalpie des Festkörpers
$\sigma_{lv}$ = Oberflächenspannung der Flüssigkeit
$\sigma_{sl}$ = Grenzflächenspannung (fest/flüssig)

die Adhäsionsarbeit $W^a$, die ein Maß für die Haftung darstellt, zu klein würde. Dieses Phänomen macht man sich bekanntermaßen z.B. bei einer mit Teflon beschichteten Bratpfanne zunutze, auf deren Oberfläche beim Braten keine Speisen anhaften. Besitzen die beiden Phasen hingegen die gleiche Oberflächenspannung bzw. -enthalpie, wird die Grenzflächenspannung Null. Für diesen Fall wird die Adhäsionsarbeit $W^a$ maximal gleich der doppelten Oberflächenspannung, d.h. gleich der Kohäsionsarbeit $W^c$ der Phasen $W^a = 2\sigma_{sv} = W^c$.

Es erscheint möglich, das als modifiziertes Polydialkylsiloxan ein polyether- oder polyestermodifiziertes hydrofunktionelles oder acrylfunktionelles Polydialkylsiloxan verwendet wird. Als besonders wirksam hat sich jedoch erwiesen die Verwendung eines auf einem polyethermodifizierten

Polydimethylsiloxan basierenden Oberflächenadditivs des Typs BYK 348, das unter dieser Bezeichnung von der BYK Chemie Wesel vertrieben wird.

Grundsätzlich möglich erscheint auch die Verwendung einer Mischung verschiedener oberflächenaktiver Additive.

Erfindungsgemäß erweist es sich als vorteilhaft, wenn das oberflächenaktive Additiv oder eine Mischung derartiger Additive dem Bindemittel in einer Konzentration von 0,01 - 5 Masse-%, vorzugsweise 0,01 - 0,5 Masse-%, bezogen auf das verwendete Bindemittel zuzüglich Härter, zugegeben wird.

Beispiel 1

Als Basissystem wurde ein handelsüblicher Leim auf UF-Basis mit einem Feststoffgehalt von 66,5 % verwendet, dem 1 % Ammoniumsulfat (Härter) in 40%iger wässriger Lösung (Feststoff auf Feststoff) zugesetzt wurde. Ferner wurde dem Basissystem 0,05 % des auf einem polyethermodifizierten Polydimethylsiloxan basierenden oberflächenaktiven Additivs des Typs BYK 348 beigefügt; das Gemisch wurde dann durch Wasserzugabe auf einen Feststoffgehalt von 55 % eingestellt.

Hackschnitzel aus entrindetem Fichtenholz wurden mittels eines Messerringzerspaners zu üblichen Spänen aufbereitet und auf eine Restfeuchte von 2 % getrocknet. Die so getrockneten Späne wurden mit einem Bindemittel des Typs BASF K 350 einmal mit und einmal ohne Zugabe des vorstehend definierten oberflächenaktiven Additivs beleimt. Das aus den beleimten Spänen gebildete Vlies wurde anschließend bei einer Presstemperatur von 200°C und einer spezifischen Presszeit von 6 s/mm zu Spanplatten mit einer Dichte von 620 kg/m$^3$ und einer Dicke von 16 mm verarbeitet. Nach der Herstellung und dem Abkühlen wurden die Platten im Normalklima (20°C und 65 % rel. Luftfeuchtigkeit) bis zur Gewichtskonstanz gelagert.

Anschließend wurde dann die Querzugfestigkeit dieser Platten nach DIN EN 323 bestimmt. Dabei ergab sich für die mit dem oberflächenaktiven Additiv hergestellte Spanplatte eine Querzugfestigkeit von 0,51 N/mm$^2$, für die ohne dieses Additiv hergestellte Spanplatte jedoch nur eine Querzugfestigkeit von 0,44 N/mm$^2$.

Beispiel 2

Als Basissystem wurde ein handelsüblicher Leim des Typs BASF K407 auf UF-Basis mit einem Feststoffgehalt von 67 % verwendet, dem 1 % Ammoniumsulfat (Härter) in 40%iger wässriger Lösung (Feststoff auf Feststoff) zugesetzt wurde. Dem Basissystem wurde dann 0,05 % des oberflächenaktiven Additivs BYK 348 beigefügt.

Fasern, die in herkömmlicher Weise in einem Refiner hergestellt wurden, wurden einmal nur mit dem vorstehend definierten Bindemittel und einmal mit diesem zuvor mit dem oberflächenaktiven Additiv vermischten Bindemittel beaufschlagt. Aus den so behandelten Fasern wurden dann MDF-Platten hergestellt, die nach dem Abkühlen im Normalklima (20°C und 65 % rel. Luftfeuchtigkeit) gelagert wurden.

Es wurde dann die Querzugfestigkeit dieser Platten nach DIN EN 323 bestimmt. Die mit dem oberflächenaktiven Additiv hergestellte MDF-Platte wies eine Querzugfestigkeit von 0,97 N/mm$^2$, die ohne dieses Additiv hergestellte MDF-Platte jedoch nur eine Querzugfestigkeit von 0,85 N/mm$^2$ auf.

**Patentansprüche**

1. Verfahren zur Herstellung lignocellulosehaltiger Formkörper aus Partikeln, wie z.B. Fasern oder Spänen, und organischen Bindemitteln, **dadurch gekennzeichnet, dass** als Bindemittel Harnstoff-Formaldehyd-, Melamin-, Phenolharze oder eine Kombination aus diesen verwendet werden und vor dessen Vermischung mit den Partikeln ein oberflächenaktives Additiv auf Basis eines modifizierten Polydialkylsiloxans, eines Polyacrylats oder Polyacrylat-Copolymers zugegeben wird.

2. Verfahren nach Anspruch 1, **dadurch gekennzeichnet, dass** als modifiziertes Polydialkylsiloxan ein polyether- oder polyestermodifiziertes hydrofunktionelles oder acrylfunktionelles Polydialkylsiloxan verwendet wird.

3. Verfahren nach einem der vorhergehenden Ansprüche, **gekennzeichnet durch** die Verwendung einer Mischung verschiedener oberflächenaktiver Additive.

4. Verfahren nach einem der vorhergehenden Ansprüche, **dadurch gekennzeichnet, dass** das oberflächenaktive Additiv oder eine Mischung derartiger Additive dem Bindemittel in einer Konzentration von 0,01 - 5 Masse-%, vorzugsweise 0,01 - 0,5 Masse-%, bezogen auf das verwendete Bindemittel zuzüglich Härter, zugegeben wird.

**Claims**

1. Method for the production of lignocellulose-containing mouldings comprising particles, such as, for example, fibres or chips, and organic binders, **characterized in that** urea/formaldehyde resins, melamine resins, phenol resins or a combination of these are used as binders and, before the mixing thereof of the particles, a surface-active additive based on a modified polydialkylsiloxane, a polyacrylate or a polyacrylate copolymer is added.

2. Method according to Claim 1, **characterized in that** the modified polydialkylsiloxane used is a polyether- or polyester-modified hydrofunctional or acryloyl-functional polydialkylsiloxane.

3. Method according to either of the preceding claims, **characterized by** the use of a mixture of different surface-active additives.

4. Method according to any of the preceding claims, **characterized in that** the surface-active additive or a mixture of such additives is added to the binder in a concentration of 0.01 - 5% by mass, preferably 0.01 - 0.5% by mass, based on the binder used plus curing agent.

**Revendications**

1. Procédé pour préparer des corps de forme renfermant de la lignocellulose à partir de particules telles que par exemple, des fibres ou des écorces et un liant organique, **caractérisé par** l'utilisation en tant que liant d'urée formaldéhyde, mélamine, de résine phénolique ou une combinaison de ceux-ci, et l'ajout avant leur mélange avec les particules d'un additif surfactant à base d'un polydialkylsiloxane modifié, un polyacrylate ou un copolymère de polyacrylate.

2. Procédé selon la revendication 1, **caractérisé par** l'utilisation en tant que polydialkylsiloxane modifié d'un polydialkylsiloxane ayant une fonction hydro ou acryl modifié par un polyéther ou un polyester.

3. Procédé selon l'une des revendications précédentes, **caractérisé par** l'utilisation d'un mélange de différents surfactants.

4. Procédé selon l'une des revendications précédentes, **caractérisé en ce que** l'additif surfactant ou un mélange d'additifs de ce type, est ajouté au liant dans une concentration de 0,01 à 5% en poids, de préférence entre 0,01 à 0,5 % en poids, déterminée par rapport au liant utilisé, y compris le durcisseur.